# EUROPEAN PATENT SPECIFICATION

(11) **EP 2 596 345 B1**
(45) Date of publication and mention of the grant of the patent: **23.04.2014**
(21) Application number: 11745506.3
(22) Date of filing: 14.07.2011
(51) Int. Cl.: G01N 29/22, G01N 29/27

(54) **FEEDING DEVICE FOR AN ULTRASOUND INSPECTION SYSTEM**
ZUFÜHRVORRICHTUNG FUR ULTRASCHALLPRÜFSYSTEM
DISPOSITIF D'ALIMENTATION POUR UN SYSTÈME D'INSPECTION ULTRASONORE

(30) Priority: 05.08.2010 DE 102010038973; 21.07.2010 DE 102010031637
(43) Date of publication of application: 29.05.2013
(73) Proprietor: GE Sensing & Inspection Technologies GmbH, 50354 Hürth (DE)
(72) Inventor: MEINERT, Damian, 40764 Langenfeld (DE); SCHMITZ, Stephan, 50933 Köln (DE)
(74) Representative: Bauer Vorberg Kayser Patentanwälte
(86) International application number: PCT/EP2011/062030
(87) International publication number: WO 2012/010487

(56) References cited:
- US-A- 3 510 042
- US-A- 3 640 123
- US-A- 4 634 323
- US-A- 5 303 592

## Description

The invention relates to a feeding device for an ultrasound inspection system.

Guiding devices for guiding test objects in ultrasound inspection systems are known from the prior art. For example, DE 19931350 B4 discloses an inspection device for the ultrasound inspection of bar stock in which guiding means are provided on both end faces of the tubular container. The guiding means are thus configured for guiding the bar to be inspected in such a way that the bar to be inspected is disposed substantially concentrically with the cylinder axis. The guiding means can be assembled from two semi-annular portions.

Furthermore, a device for the non-destructive inspection of elongated test pieces with ultrasonic pulses is known from the utility model DE 7933989 U1, wherein a mutual guidance of the test piece and the test chamber is accomplished by means of guiding bushes.

The aforementioned documents are disadvantageous in that the guiding bushes must be replaced if the transverse dimension of the test objects changes.

Feeding devices allowing a more flexible feeding operation by using elastically biased guiding means are also known, as disclosed in US 3640123.

Since faulty results occur during ultrasound inspection if the test objects are not fed into the ultrasound inspection chamber of the ultrasound inspection system in a centered manner, it is the object of the present invention to provide a simple and reliable feeding device. Moreover, it is an object of the present invention to enable a reliable ultrasound inspection of test objects with a changing cross section.

This object is accomplished by means of a feeding device with the features of claim 1, an ultrasound inspection system according to claim 12, and a method for ultrasound inspection according to claim 15. Advantageous embodiments are in each case the subject matter of the dependent claims. The description, in particular in connection with the figures, additionally characterizes and specifies the invention.

The invention relates to a feeding device for an ultrasound inspection system with means for transporting a test object, in particular a pipe, into an ultrasound inspection chamber of the ultrasound inspection system. The feeding device according to the invention comprises at least one guiding unit with at least three elastically biased counter bearings. The counter bearings, via contact parts, rest on the jacket surface of the test object and guide the test object during transport.

The feeding device according to the invention is advantageous in that the test object is thereby fed into the ultrasound inspection chamber in a centered manner and that the ultrasound inspection can thus supply reliable results.

According to the invention, the counter bearings can be uniformly disposed in the circumferential direction of the jacket surface of the test object. In order to achieve an optimum distribution of the weight of the test object on the counter bearings, it is, however, also conceivable that the counter bearings are non-symmetrically disposed in the circumferential direction of the jacket surface; in this case, it is advantageous in particular if the majority of the counter bearings used are disposed under the test object.

In an advantageous embodiment of the invention, a spring, preferably a leaf spring, is provided as the means for elastically biasing the counter bearing in the direction of the test object. Preferably, this means can be individually biased, for example by a threaded adjustment option. It is thus possible to bias the counter bearings in a non-symmetrical way, for example, to bias those that rest against the lower side of the jacket surface of the test object more strongly than those counter bearings resting against the upper half of the jacket surface.

For the present invention, springs of spring steel are preferably used, such as e.g. the spring steel 38Si7. However, using other materials with an even higher elastic limit is also conceivable.

In an advantageous embodiment of the present invention, the counter bearings moreover have damping means. Damping means dampen the return movement of the counter bearing. The damping property is, for example, a property inherent in the rubber material used.

According to the invention, a rubber buffer which has a cross section that changes in the direction of the load is used as the elastically biased counter bearing. The rubber buffer can be designed to have a conical, preferably parabolic, shape.

Natural rubbers are particularly suitable as materials for the rubber buffer. In a preferred embodiment, the rubber buffer has a Shore hardness of about 55. However, the use of any other material that exhibits an elastically dampening behavior is also conceivable.

In order not to damage the surface of the test object while it is guided through the ultrasound inspection system, the contact part preferably has to be designed in such a way that there is as little surface pressure as possible. This can be achieved, among other things, by as large a contact surface as possible between the contact part and the test object. In a preferred embodiment, the contact part is formed from a harder material than the test object; materials with a Rockwell hardness of at least 60 HRC, preferably at least 64 HRC, are particularly suitable for this purpose. However, it is also conceivable that a contact part of plastic is used.

According to a preferred embodiment, the contact part comprises a run-up surface. A run-up surface means a surface of the contact part which is inclined towards the direction of transport, in order to cause the contact part to pivot against the bias at least when the test object is inserted.

In an advantageous embodiment of the invention, the contact parts can be double-wedge bodies, preferably non-symmetrical double-wedge bodies. By using double-wedge bodies as contact parts, two run-up surfaces are defined and there is the option of feeding or transporting the test object not only in one direction, but in both directions. This is particularly advantageous if the test object has to be moved back and forth, for example if an area of the test object has to be re-inspected with ultrasound. The test object does not have to be guided out of the ultrasound inspection system completely and transported to the inlet of the ultrasound inspection system anymore. The test object can simply be moved back to the area to be inspected.

The method according to the invention is particularly suitable for the ultrasound inspection of rods and pipes. Preferably, pipes with a cross section that changes in the longitudinal direction, in this case particularly pipes with a thickened end, particularly preferably upset end pipes, are examined with the method according to the invention. Because of the elastic properties, the counter bearing or counter bearings adapt optimally to the different diameters of the test objects and position the test objects centrally in the ultrasound inspection system. However, it is also conceivable to examine other axially-symmetrical test object, such as, for example, a hexagon or nonagon with the ultrasound inspection method.

In the present invention, the test objects cause the counter bearings to pivot. Therefore, no external drives, such as motors, are required that increase the susceptibility to failure of the ultrasound inspection system.

Test objects with various diameters or cross sections can be examined with the ultrasound inspection system according to the invention. The pipes to be examined can have a diameter of a few centimeters, preferably smaller than 50 mm, particularly smaller than 80 mm.

An ultrasound inspection system in which the feeding device according to the invention is located outside the ultrasound inspection chamber must be considered particularly advantageous. On the one hand, this construction enables an easier access to the individual elements of the ultrasound inspection system. On the other hand, the ultrasound inspection chamber is used exclusively for ultrasound inspection, so that the inspection yields more reliable results.

The invention as well as the technical environment is explained in more detail below with reference to the figures. It must be remarked that the Figures depict a particularly preferred embodiment of the invention, but that they are not limited thereto. In the figures:
- Fig. 1:: shows a schematic view of the feeding device according to the invention shown in a preferred embodiment;
- Fig. 2:: shows a schematic sectional view of a feeding device according to the invention in a preferred embodiment.

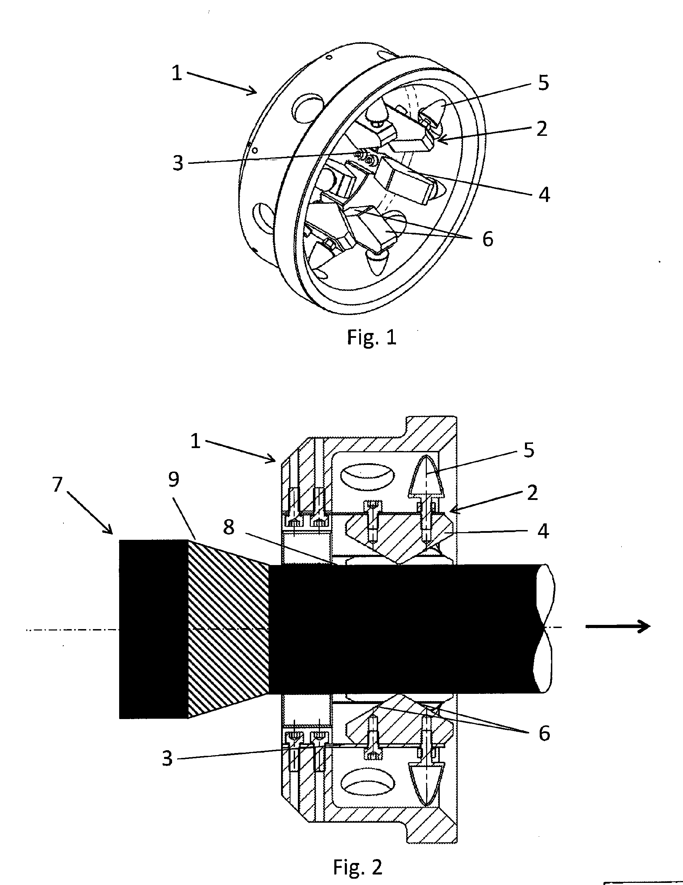

The figures show schematic views of a preferred embodiment of the present invention. The feeding device for an ultrasound inspection system comprises at least one guiding unit (1), with elastically biased counter bearings (2) resting against a jacket surface (8) of the test object (7) via a contact part (4). The contact parts (4) can be configured as double wedges (4) in a preferred embodiment. In Figure 2, the double wedge (4) has a symmetric structure; it has two run-up surfaces (6) of equal size. In addition to the contact part (4), the counter bearings (2) comprise a leaf spring (3) and a rubber buffer (5). The rubber buffer (5) is conical and has a Shore hardness of 55. The counter bearings (2) are elastically biased by the leaf spring (3) and the rubber buffer (5). In Fig. 2, it can be seen how the counter bearings (2) rest on the jacket surface (8) of the test object (7). If the test object (7) is transported in the direction of the arrow, the counter bearings (2) slide with the run-up surfaces (6) of the contact parts (4) over the jacket surface (8). When the test object (7) with its thickened ends (9) reaches the counter bearings (2), they are pushed in an outward direction and pivoted against the bias.

## Claims

1. Feeding device for an ultrasound inspection system, with means for transporting a test object (7), in particular a pipe, into an ultrasound inspection chamber of the ultrasound inspection system, comprising at least one guiding unit (1) for the test object with at least three elastically biased counter bearings (2) resting against a jacket surface (8) of the test object (7) via a contact part (4) in order to guide the test object during transport, **characterized in that** the counter bearing (2), as a means for elastically biasing it, comprises a rubber buffer (5) and **in that** the rubber buffer (5) exhibits a change of the cross section in the direction of the load.

2. Feeding device according to claim 1, **characterized in that** the several counter bearings (2) are uniformly distributed in the circumferential direction of the jacket surface (8) of the test object (7).

3. Feeding device according to any one of the preceding claims, **characterized in that** the contact part (4) is substantially wedge-shaped.

4. Feeding device according to any one of the claims 1 or 2, **characterized in that** the contact part (4) is a double-wedge body.

5. Feeding device according to claim 4, **characterized in that** the contact part (4) is a non symmetrical double-wedge body

6. Feeding device according to any one of the preceding claims, **characterized in that** the contact part (4) is made from metal.

7. Feeding device according to any one of the claims 1 to 4, **characterized in that** the contact part (4) is made from plastic.

8. Feeding device according to any one of the preceding claims, **characterized in that** the contact part (4) has a hardness of at least 64 HRC.

9. Feeding device according to any one of the preceding claims, **characterized in that** the counter bearing has a damping means.

10. Feeding device according to any one of the preceding claims, **characterized in that** the counter bearing (2), as a means for elastically biasing it, comprises a spring (3).

11. Feeding device according to any one of the preceding claims, **characterized in that** the rubber buffer (5) is configured to have a conical or parabolic, shape.

12. Ultrasound inspection system, comprising a feeding device according to any one of the preceding claims.

13. Ultrasound inspection system according to the preceding claim, **characterized in that** the feeding device is located outside the ultrasound inspection chamber.

14. Ultrasound inspection system according to any one of the two preceding claims, **characterized in that** a rubber collar is furthermore provided for sealing the ultrasound inspection chamber.

15. Method for ultrasound inspection, wherein, in the first step, the test object (7) is fed into an ultrasound inspection chamber of an ultrasound inspection system using the feeding device according to any one of the claims 1 to 11, and, in an intermediary or simultaneous step, the test object is inspected with ultrasound.

16. Method according to claim 15, **characterized in that** the test object (7) is a pipe with a cross section changing in the longitudinal direction.

17. Method according to claim 16, **characterized in that** the pipe is an upset end pipe.

## Patentansprüche

1. Zuführvorrichtung für ein Ultraschallprüfsystem mit Mitteln zum Transportieren eines Prüfobjekts (7), insbesondere eines Rohrs, in eine Ultraschallprüfkammer des Ultraschallprüfsystems, aufweisend wenigstens eine Führungseinheit (1) für das Prüfobjekt mit wenigstens drei elastisch vorgespannten Gegenlagern (2), die über ein Kontaktteil (4) gegen eine Mantelfläche (8) des Prüfobjekts (7) anliegen, um das Prüfobjekt während des Transports zu führen, **dadurch gekennzeichnet, dass** das Gegenlager (2) als ein Mittel zu seiner elastischen Vorspannung einen Gummipuffer (5) aufweist und dass der Gummipuffer (5) eine Änderung des Querschnitts in der Lastrichtung aufweist.

2. Zuführvorrichtung nach Anspruch 1, **dadurch gekennzeichnet, dass** die mehreren Gegenlager (2) gleichmäßig in der Umfangsrichtung der Mantelfläche (8) des Prüfobjekts (7) verteilt sind.

3. Zuführvorrichtung nach einem der vorhergehenden Ansprüche, **dadurch gekennzeichnet, dass** das Kontaktteil (4) im Wesentlichen keilförmig ist.

4. Zuführvorrichtung nach Anspruch 1 oder 2, **dadurch gekennzeichnet, dass** das Kontaktteil (4) ein Doppelkeilkörper ist.

5. Zuführvorrichtung nach Anspruch 4, **dadurch gekennzeichnet, dass** das Kontaktteil (4) ein nichtsymmetrischer Doppelkeilkörper ist.

6. Zuführvorrichtung nach einem der vorhergehenden Ansprüche, **dadurch gekennzeichnet, dass** das Kontaktteil (4) aus Metall hergestellt ist.

7. Zuführvorrichtung nach einem der Ansprüche 1 bis 4, **dadurch gekennzeichnet, dass** das Kontaktteil (4) aus Kunststoff hergestellt ist.

8. Zuführvorrichtung nach einem der vorhergehenden Ansprüche, **dadurch gekennzeichnet, dass** das Kontaktteil (4) eine Härte von wenigstens 64 HRC aufweist.

9. Zuführvorrichtung nach einem der vorhergehenden Ansprüche, **dadurch gekennzeichnet, dass** das Gegenlager ein Dämpfungsmittel aufweist.

10. Zuführvorrichtung nach einem der vorhergehenden Ansprüche, **dadurch gekennzeichnet, dass** das Gegenlager (2) als ein Mittel zu seiner elastischen Vorspannung eine Feder (3) aufweist.

11. Zuführvorrichtung nach einem der vorhergehenden Ansprüche, **dadurch gekennzeichnet, dass** der Gummipuffer (5) ausgelegt ist, eine konische oder parabolische Form aufzuweisen.

12. Ultraschallprüfsystem, aufweisend eine Zuführvorrichtung nach einem der vorhergehenden Ansprüche.

13. Ultraschallprüfsystem nach dem vorhergehenden Anspruch, **dadurch gekennzeichnet, dass** die Zuführvorrichtung außerhalb der Ultraschallprüfkammer angeordnet ist.

14. Ultraschallprüfsystem nach einem der zwei vorhergehenden Ansprüche, **dadurch gekennzeichnet, dass** eine Gummimanschette ferner zum Abdichten der Ultraschallprüfkammer vorgesehen ist.

15. Verfahren zur Ultraschallprüfung, wobei in dem ersten Schritt das Prüfobjekt (7) in eine Ultraschallprüfkammer eines Ultraschallprüfsystems unter Verwendung der Zuführvorrichtung nach einem der Ansprüche 1 bis 11 transportiert wird und in einem intermediären oder zeitgleichen Schritt das Prüfobjekt mit Ultraschall geprüft wird.

16. Verfahren nach Anspruch 15, **dadurch gekennzeichnet, dass** das Prüfobjekt (7) ein Rohr mit einem Querschnitt ist, der sich in der Längsrichtung ändert.

17. Verfahren nach Anspruch 16, **dadurch gekennzeichnet, dass** das Rohr ein gestauchtes Endrohr ist.

## Revendications

1. Dispositif d'alimentation pour un système de contrôle par ultrasons, comprenant des moyens destinés à transporter une éprouvette (7), en particulier un tuyau, dans une chambre de contrôle par ultrasons dudit système de contrôle par ultrasons, présentant au moins une unité de guidage (1) pour ladite éprouvette avec au moins trois contre-paliers (2) précontraints élastiquement qui s'appliquent contre une surface latérale (8) de ladite éprouvette (7) par une partie de contact (4) afin de guider ladite éprouvette durant le transport, **caractérisé par le fait que** ledit contre-palier (2) comprend un tampon en caoutchouc (5) en tant que moyen destiné à le précontraindre de manière élastique, et que ledit tampon en caoutchouc (5) présente un changement de section transversale dans la direction de la charge.

2. Dispositif d'alimentation selon la revendication 1, **caractérisé par le fait que** lesdits plusieurs contre-paliers (2) sont répartis uniformément dans la direction circonférentielle de la surface latérale (8) de ladite éprouvette (7).

3. Dispositif d'alimentation selon l'une quelconque des revendications précédentes, **caractérisé par le fait que** ladite partie de contact (4) présente pour l'essentiel une forme de coin.

4. Dispositif d'alimentation selon l'une quelconque des revendications 1 ou 2, **caractérisé par le fait que** ladite partie de contact (4) est un corps en double coin.

5. Dispositif d'alimentation selon la revendication 4, **caractérisé par le fait que** ladite partie de contact (4) est un corps en double coin non symétrique.

6. Dispositif d'alimentation selon l'une quelconque des revendications précédentes, **caractérisé par le fait que** ladite partie de contact (4) est réalisée en métal.

7. Dispositif d'alimentation selon l'une quelconque des revendications 1 à 4, **caractérisé par le fait que** ladite partie de contact (4) est réalisée en matière plastique.

8. Dispositif d'alimentation selon l'une quelconque des revendications précédentes, **caractérisé par le fait que** ladite partie de contact (4) présente une dureté d'au moins 64 HRC.

9. Dispositif d'alimentation selon l'une quelconque des revendications précédentes, **caractérisé par le fait que** ledit contre-palier présente un moyen amortisseur.

10. Dispositif d'alimentation selon l'une quelconque des revendications précédentes, **caractérisé par le fait que** ledit contre-palier (2) comprend un ressort (3) en tant que moyen destiné à le précontraindre de manière élastique.

11. Dispositif d'alimentation selon l'une quelconque des revendications précédentes, **caractérisé par le fait que** ledit tampon en caoutchouc (5) est configuré pour présenter une forme conique ou parabolique.

12. Système de contrôle par ultrasons, comprenant un dispositif d'alimentation selon l'une quelconque des revendications précédentes.

13. Système de contrôle par ultrasons selon la revendication précédente, **caractérisé par le fait que** ledit dispositif d'alimentation est agencé à l'extérieur de la chambre de contrôle par ultrasons.

14. Système de contrôle par ultrasons selon l'une quelconque des deux revendications précédentes, **caractérisé par le fait qu'**un manchon en caoutchouc est prévu en outre pour rendre étanche ladite chambre de contrôle par ultrasons.

15. Procédé de contrôle par ultrasons, dans lequel, dans la première étape, ladite éprouvette (7) est transportée dans une chambre de contrôle par ultrasons d'un système de contrôle par ultrasons, en utilisant le dispositif d'alimentation selon l'une quelconque des revendications 1 à 11, et, dans une étape intermédiaire ou simultanée, ladite éprouvette est contrôlée par ultrasons.

16. Procédé selon la revendication 15, **caractérisé par le fait que** ladite éprouvette (7) est un tuyau ayant une section transversale qui change dans la direction longitudinale.

17. Procédé selon la revendication 16, **caractérisé par le fait que** ledit tuyau est un tuyau terminal refoulé.
